# EUROPEAN PATENT SPECIFICATION

(11) **EP 0 697 984 B1**
(45) Date of publication and mention of the grant of the patent: **12.03.1997**
(21) Application number: 94915624.4
(22) Date of filing: 19.05.1994
(51) Int. Cl.: B65D 81/28

(54) **METHOD FOR THE STERILE PRESERVATION OF A LIQUID IN A CONTAINER**
VERFAHREN ZUR STERILEN AUFBEWAHRUNG EINER FLÜSSIGKEIT IN EINEM BEHÄLTER
PROCEDE POUR LA CONSERVATION STERILE D'UN LIQUIDE DANS UN CONTENEUR

(30) Priority: 19.05.1993 GB 9310313
(43) Date of publication of application: 28.02.1996
(73) Proprietor: GLENEAGLES SPRING WATERS COMPANY LIMITED, Blackford, Perthshire PH4 1OF (GB)
(72) Inventor: HAMILTON, John Stewart, Kirkton of Mailer, Perth PH2 0ST (GB)
(74) Representative: Hughes, Andrea Michelle
(86) International application number: GB9401077
(87) International publication number: WO9426622

(56) References cited:
- EP-A- 0 322 171
- GB-A- 1 259 100
- US-A- 2 541 525
- US-A- 3 092 552

## Description

This invention relates to containers for storing liquids and is particularly, but not exclusively, applicable to containers for storing liquid for human consumption.

The invention is concerned particularly with water containers or bottles such as are used in retailing still waters, including mineral waters.

US-A-3,092,552 teaches that silver is effective as a bacteria destroying material. This document teaches how paper cups and other containers can be rendered antiseptic by rinsing the cups and containers with a dilute solution of the silver compound. The active silver is adsorbed on the surfaces of the container and remains there after the excess reduced silver compound solution has been drained off. Thus, the water or other liquid put into the container is sterilised by the adsorbed silver going into solution.

The term "bottle" in this context includes a closure therefor.

According to one aspect of the present invention, there is provided a container or bottle incorporating internally a deposit of a material which destroys microorganisms wherein said material is in the form of a bead or pellett.

Preferably, the said material is metallic silver or a silver salt.

Preferably, the said material is present in the pores of a porous ceramic element or within a fine ceramic structure.

According to another aspect, the said material is present as a micro-thin layer on part of the inside surface of the container or bottle. For example the layer may be deposited in an annular band on the inside surface of the container.

Preferably, in the case of a bottle, the said material is present on the inside of the bottle closure. This may have manufacturing advantages over forming the deposit in the body of the bottle. In one particularly preferred form the material is silver which is impregnated in a bead or pellet of finely porous ceramic which is disposed within a ring depending from the top of the bottle closure. The pellet is retained within the ring by bending the edge of the ring inwards on the application of heat thereto.

Preferred embodiments of the invention will now be described, by way of example only, with reference to the accompanying drawings wherein:
Fig. 1 shows a bottle incorporating a deposit of bactericidal material in accordance with one embodiment of the invention;
Fig. 2 shows a bottle incorporating a deposit of a bactericidal material in accordance with another embodiment of the invention.
Fig. 3 shows the cap of a container according to a preferred embodiment of the invention.

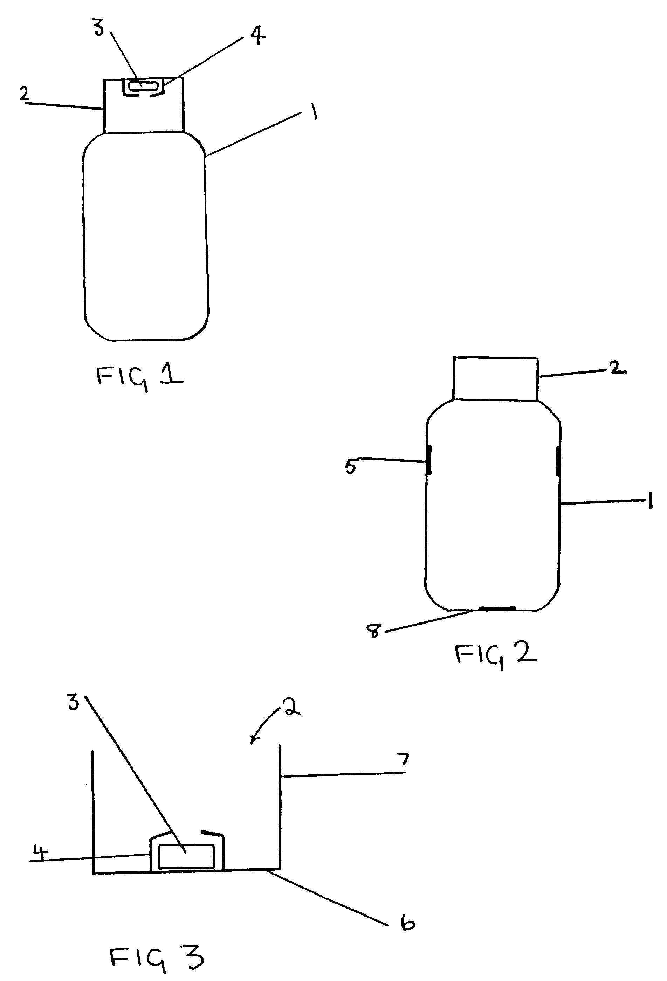

In one example of a bottle 1 in accordance with the present invention, as shown in Fig. 1, a bead or pellet 3 of fine ceramic structure, which, when baked, has a porous structure, has finely divided metallic silver anchored within the fine structure or porosity. The bead or pellet may be made by mixing a ceramic paste with silver and baking it so that the silver is exposed throughout the porous structure. The bead or pellet 3 is fixed substantially centrally inside the bottle cap 2. The bead or pellet 3 may be deposited within an inner cage or ring 4 formed by a downwardly depending wall arranged concentrically within the sides of the cap 2. This is then sealed by heat treatment.

In a preferred embodiment, the impregnated pellet 3 is locked into a modified bottle cap as shown in Fig. 3. A substantially circular wall 4 is formed inside the cap 2, extending a short distance from the top 6 of the cap 2 and formed concentrically with, and inwardly of, the cap wall 7. The impregnated pellet 3 is then placed within this ring 4. The ring 4 is preferably made of a plastics material. The edge distal from the top of the cap is heated and bent inwards to fix the pellet 3 within the ring 4.

In another example of a bottle 1 in accordance with the present invention, as shown in Fig. 2, a micro-thin deposit of metallic silver forms an annular band 5 on part of the inside surface of the bottle 1. Alternatively, the deposit could be positioned at the base of the bottle as shown at 8.

In each example, the silver present acts in a bactericidal manner with the advantage that high purity of the product contained in the bottle 1 is preserved subsequent to opening. Tests have proved that a pellet 3 inserted in a container 1 as described is effective against microbes.

It will be preferable to dispose the bottle 1 on its side in order to promote contact between the contents and the silver-bearing element or deposit.

Although in the preferred embodiment the container is used to store liquids for human consumption, e.g. spring water, it may also have other applications where it is necessary to store a pure liquid which must be kept free of bacteria, such as contact lens solution.

## Claims

1. A container (1) for storing liquids, said container (1) incorporating internally a deposit (3) of a material which destroys micro-organisms, wherein said material is in the form of a bead or pellet (3).

2. The container of claim 1 wherein said pellet (3) is disposed in a ring (4) depending from the top of said bottle closure (2).

3. The container of claim 2 wherein said pellet (3) is retained within said ring (4) by applying heat to the edge of said ring (4).

4. A container (1) for storing liquids, said container (1) incorporating internally a deposit (3) of a material which destroys micro-organisms, characterised in that said material is present as a micro-thin layer in the form of an annular band (5) on part of the inside surface of said container (1).

5. The container of any preceding claim, wherein said material is metallic silver or a silver salt.

6. The container of any preceding claim wherein said material is present in the pores of a porous ceramic element.

7. The container of any of claims 1 to 5 wherein said material is present within a fine ceramic structure.

8. The container of any preceding claim wherein said container is a bottle (1) and said material is present on the inside of the bottle closure (2).

## Patentansprüche

1. Behältnis zum Aufbewahren von Flüssigkeiten, wobei das Behältnis (1) innenliegend eine Ablagerung eingearbeitet hat, aus einem Material, welches Mikroorganismen zerstört, wobei dieses Material die Form eines Beads oder eines Pellets hat.

2. Behältnis nach Anspruch 1, bei dem das Pellet (3) in einem Ring (4) an der Spitze des Flaschenverschlusses (2) angebracht ist.

3. Behältnis nach Anspruch 2, bei dem das Pellet (3) durch den Ring (4) gehalten wird, durch Zuführen von Hitze zu der Kante dieses Ringes (4).

4. Behältnis (1) zum Aufbewahren von Flüssigkeiten, wobei das Behältnis (1) innenliegend eine Ablagerung(3) eingearbeitet hat, aus einem Material, welches Mikroorganismen zerstört, dadurch gekennzeichnet, daß das Material in einer mikro-dünnen Schicht, in der Form eines ringförmigen Bandes (5), auf einem Teil der Innenfläche des Behältnisses (1), vorliegt.

5. Behältnis nach einem der vorhergehenden Ansprüche, bei dem das Material metallisches Silber oder ein Silbersalz ist.

6. Behältnis nach einem der vorhergehenden Ansprüche, bei dem das Material in den Poren eines porösen Keramikelementes vorliegt.

7. Behältnis nach einem der Ansprüche 1-5, bei dem das Material innerhalb einer feinen Keramikstruktur vorliegt.

8. Behältnis nach einem der vorhergehenden Ansprüche, bei dem das Behältnis eine Flasche (1) ist und das Material auf der Innenseite des Flaschenverschlusses (2) vorliegt.

## Revendications

1. Conteneur (1) permettant de stocker des liquides, ledit conteneur (1) incorporant à l'intérieur un dépôt (3) d'un matériau qui détruit les micro-organismes, dans lequel ledit matériau est sous la forme d'une perle ou d'une pastille (3).

2. Conteneur selon la revendication 1, dans lequel ladite pastille (3) est disposée dans un anneau (4) solidarisé la partie supérieure dudit système de fermeture de la bouteille (2).

3. Conteneur selon la revendication 2, dans lequel ladite pastille (3) est retenue à l'intérieur dudit anneau (4) en appliquant de la chaleur au bord dudit anneau (4).

4. Conteneur (1) permettant de stocker des liquides, ledit conteneur (1) incorporant à l'intérieur un dépôt (3) d'un matériau qui détruit les micro-organismes, caractérisé en ce que ledit matériau est présent en tant que couche micro-fine sous la forme d'une bande annulaire (5) sur une partie de la surface intérieure dudit conteneur (1).

5. Conteneur selon l'une quelconque des revendications précédentes, dans lequel ledit matériau est de l'argent métallique ou un sel d'argent.

6. Conteneur selon l'une quelconque des revendications précédentes, dans lequel ledit matériau est présent dans les pores d'un élément céramique poreux.

7. Conteneur selon l'une des revendications 1 à 5, dans lequel ledit matériau est présent à l'intérieur d'une structure en céramique fine.

8. Conteneur selon l'une quelconque des revendications précédentes, dans lequel ledit conteneur est une bouteille (1) et ledit matériau est présent à l'intérieur du système de fermeture (2) de la bouteille.
